Europäisches Patentamt

European Patent Office

Office européen des brevets

(11) Veröffentlichungsnummer: **0 289 889 B1**

(12) **EUROPÄISCHE PATENTSCHRIFT**

(45) Veröffentlichungstag der Patentschrift: **18.03.92**

(51) Int. Cl.⁵: **B60G 3/18**, B60G 15/00

(21) Anmeldenummer: **88106536.1**

(22) Anmeldetag: **23.04.88**

(54) **Radaufhängung für gelenkte Räder von Kraftfahrzeugen.**

(30) Priorität: **02.05.87 DE 3714688**

(43) Veröffentlichungstag der Anmeldung:
**09.11.88 Patentblatt 88/45**

(45) Bekanntmachung des Hinweises auf die
Patenterteilung:
**18.03.92 Patentblatt 92/12**

(84) Benannte Vertragsstaaten:
**DE ES FR GB IT**

(56) Entgegenhaltungen:
DE-A- 1 938 850
DE-A- 2 332 330
DE-A- 3 509 145
FR-A- 2 346 175
US-A- 2 097 466

ATZ AUTOMOBILTECHNISCHE ZEITSCHRIFT,
Band 79, September 1977, Seiten 357-365,
Stuttgart, DE; W. MATSCHINSKY et al.: "Die
Doppelgelenk-Federbeinachse der neuen
BMW-Sechszylinderwagen der Baureihe 7"

(73) Patentinhaber: **AUDI AG**
**Auto-Union-Strasse 1 Postfach 220**
**W-8070 Ingolstadt(DE)**

(72) Erfinder: **Killian, Friedrich**
**Am Sportplatz 11**
**W-8079 Hitzhofen(DE)**

(74) Vertreter: **Le Vrang, Klaus**
**AUDI AG Postfach 220 Patentabteilung I/EOP**
**W-8070 Ingolstadt(DE)**

# Beschreibung

Die Erfindung betrifft eine Radaufhängung für gelenkte Räder von Kraftfahrzeugen gemäß dem Oberbegriff des Patentanspruches 1.

Eine derartige Radaufhängung zeigt beispielsweise die DE-PS 19 38 850 oder die DE-OS 35 09 145. Als oberes Radführungselement kann dabei ein Querlenker mit einem Anlenkpunkt am Radträger, ein mit dem Radträger baulich kombinierter Teleskopstoßdämpfer oder ebenfalls eine Kombination aus zwei Einzellenkern dienen. Der Vorteil derartiger Einzellenker liegt insbesondere in der Definition einer ideellen Lenkachse, die gegebenenfalls unabhängig von baulichen Zwängen verwirklichbar ist.

In dem Bemühen, ein möglichst günstiges kinematisches Verhalten der Radaufhängung sicherzustellen, wobei der Radsturz, der Nachlauf, Federungs-Dämpfungs- und Abrollverhalten sowie die Lenkungsrückstellung als nur einige Parameter genannt seien, und eine konstruktiv einfache, zuverlässige Radaufhängung zu schaffen, ist der Konstrukteur zumeist zu Kompromissen gezwungen. Bei angetriebenen Rädern der Radaufhängung kann dabei insbesondere die Lenkungsrückstellung aufgrund der Antriebseinflüsse und der Freigang der Gelenkwellen (Antriebswellen) problematisch sein.

Aufgabe der Erfindung ist es, eine Radaufhängung der gattungsgemäßen Art zu schaffen, die ohne konstruktiven Mehraufwand und ohne Beeinträchtigung anderer achskinematicher Parameter eine zuverlässige Lenkungsrückstellung und bei angetriebenen Rädern einen verbesserten Freigang der Gelenkwellen sicherstellt.

Diese Aufgabe wird mit den kennzeichnenden Merkmalen des Patentanspruches 1 gelöst. Erfindungsgemäß wird vorgeschlagen, die Tragfeder derart an einem der unteren Lenker abzustützen, daß diese eine Querkraftkomponente im Sinne eines Lenkeinschlages ausübt. Diese Querkraftkomponente wird in Geradeausfahrtstellung der Räder durch die Querkraftkomponente an der gegenüberliegenden Radaufhängung über die Lenkung kompensiert. Aufgrund der geometrischen Auslegung der Lenker überwiegt bei einem Kurveneinschlag jedoch die Querkraftkomponente bzw. das daraus resultierende Rückstellmoment am kurvenäußeren Rad das entgegengerichtete Moment am kurveninneren Rad, so daß auf die Räder bzw. die Lenkung ein resultierendes Rückstellmoment ausgeübt wird. Die Feder kann bevorzugt eine Schraubendruckfeder oder eine Gasfeder sein.

Weitere vorteilhafte und zweckmäßige Ausgestaltungen der Erfindung sind den Patentansprüchen 2 bis 7 entnehmbar.

So kann in baulich besonders günstiger Weise die Feder, insbesondere ein aus Teleskopstoßdämpfer und Feder gebildetes Federbein, gemäß Anspruch 2 an dem vorderen Lenker angreifen und die aufbauseitige Abstützung des Federbeines zwischen den Lenkern liegen. Gemäß Anspruch 3 können in der Draufsicht gesehen die Abstützpunkte des Federbeines bzw. deren Verbindungsgerade etwa quer zur Fahrzeuglängsachse bzw. parallel zu den Radachsen in der Geradeausfahrtstellung ausgerichtet sein, wodurch die Querkraftkomponente am Lenker einen günstigen Wert einnimmt.

Durch die Merkmale der Ansprüche 4 bis 6 wird die Lenkungsrückstellung und bei angetriebenen Rädern der Freigang zwischen Federbein und Gelenkwelle weiter verbessert.

Zunächst wird durch die beschriebene Anordnung der Lenker das Maß a günstig beeinflußt, welches den Störkrafthebelarm im Bereich der Radachse definiert. Das Maß a ist somit der Abstand zwischen der Lenkachse und der senkrechten Radmittenebene in Höhe der Radachse. Ist das Maß a derart ausgelegt, daß es in Geradeausfahrtstellung der Räder des Kraftfahrzeuges 0 oder nahezu 0 beträgt, so wird durch die erfindungsgemäßen Merkmale erreicht, daß das Maß a beim kurvenäußeren Einschlag geringer als beim kurveninneren Einschlag ist. Dies bewirkt bei angetriebenen Rädern und einem entsprechenden Antriebsmoment (bei Beschleunigung) ein Rückstellmoment an der Lenkung, resultierend aus den Antriebskräften.

Ferner wird durch diese Lenkeranordnung erreicht, daß der vordere Lenker und die Gelenkwelle beim Einschlagen des Rades stets in der gleichen Richtung (in der Draufsicht nach vorne oder nach hinten) auslenken. Da die Feder bzw. das Federbein an diesem Lenker abgestützt ist, wird deren unterer Abschnitt entsprechend mitbewegt. Dadurch bleibt der Abstand zwischen Feder oder Federbein und Gelenkwelle in der Geradeausfahrtstellung und bei Lenkeinschlägen im wesentlichen gleich, so daß hinsichtlich des Freiganges keine Probleme auftreten.

Ein Ausführungsbeispiel der Erfindung ist im folgenden mit weiteren Einzelheiten näher erläutert. Die schematische Zeichnung zeigt in

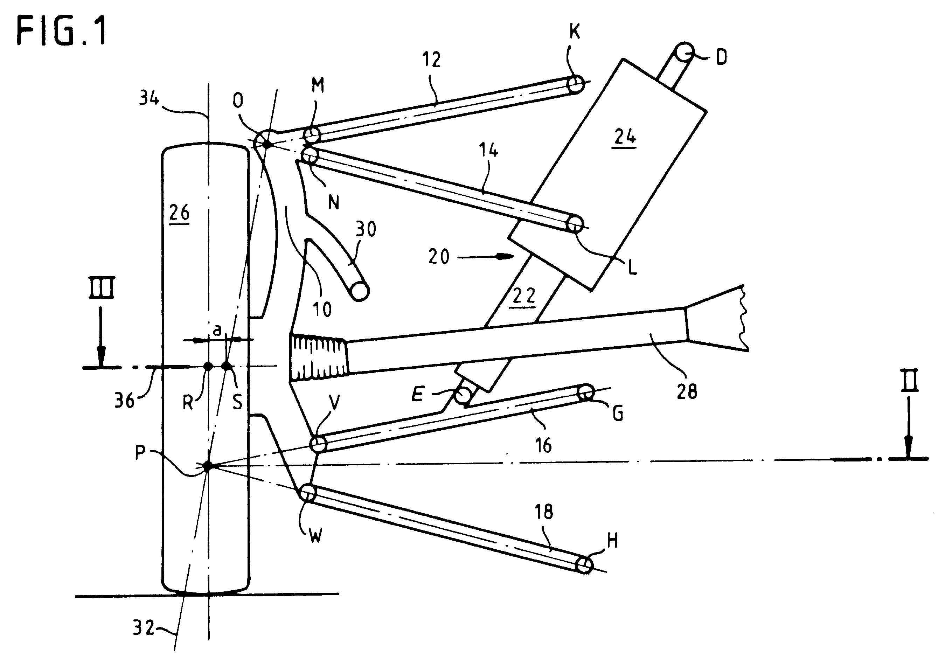

Fig. 1   eine Radaufhängung für gelenkte, angetriebene Räder eines Kraftfahrzeuges, mit zwei unteren Einzellenkern und einem Federbein, in einer Ansicht vom Fahrzeugheck aus;

Fig. 2   eine Draufsicht in der Ebene II-II der Fig. 1 auf die unteren Lenker bzw. deren geometrische Anordnung, mit den eingezeichneten Rückstellkräften aus der Federkraft;

Fig. 3   eine Draufsicht in der Ebene III-III der Fig. 1 auf die unteren Lenker bzw. deren geometrische Anordnung, mit Darstellung des Freiganges für die Gelenkwelle und der rückstellenden Vortriebskraft durch das unterschiedliche Maß a.

Die gezeigt Radaufhängung weist einen Radträger 10 auf, der an zwei oberen Lenkern 12,14 und an zwei unteren Lenkern 16,18 geführt ist. Die jeweils voneinander unabhängigen Lenker sind über elastische Gelenke an dem Radträger 10 bzw. an dem nicht dargestellten Aufbau des Kraftfahrzeuges bei den Punkten G, H, V, W (untere Lenker 16,18) bzw. K, L, M, N (obere Lenker 12,14) angelenkt.

An dem in Fahrtrichtung vorne liegenden, unteren Lenker 16 ist in Nähe des Radträgers 10 an dem Punkt E ein Federbein 20 abgestützt, welches sich aus einem Teleskop-Stoßdämpfer 22 und einer Schraubendruckfeder 24 zusammensetzt. Der aufbauseitige Abstützpunkt des Federbeines 20 ist mit D definiert und liegt in der Draufsicht gesehen in der Nähe der Verbindungsgeraden der Anlenkpunkte G und H.

Das an dem Radträger 10 drehbar gelagerte Rad 26 des Kraftfahrzeuges wird über eine Gelenkwelle 28 von einem nicht dargestellten Antriebsaggregat angetrieben. Ferner ist an den Radträger 10 ein Lenkhebel 30 angeformt, der in bekannter Weise mit einer Spurstange (nicht dargestellt) der Lenkung des Kraftfahrzeuges verbunden ist.

Die sich aus der gedachten Verlängerungs der Lenker 12,14 bzw. 16,18 ergebenden ideellen Schwenkpunkte O, P des Rades 26 definieren eine Lenkachse 32. Der Störkrafthebelarm a ist gebildet durch den Abstand zwischen der Radmittelebene (Linie 34) und der Lenkachse 32 in der Radachse 36 (Kreuzungspunkte R und S).

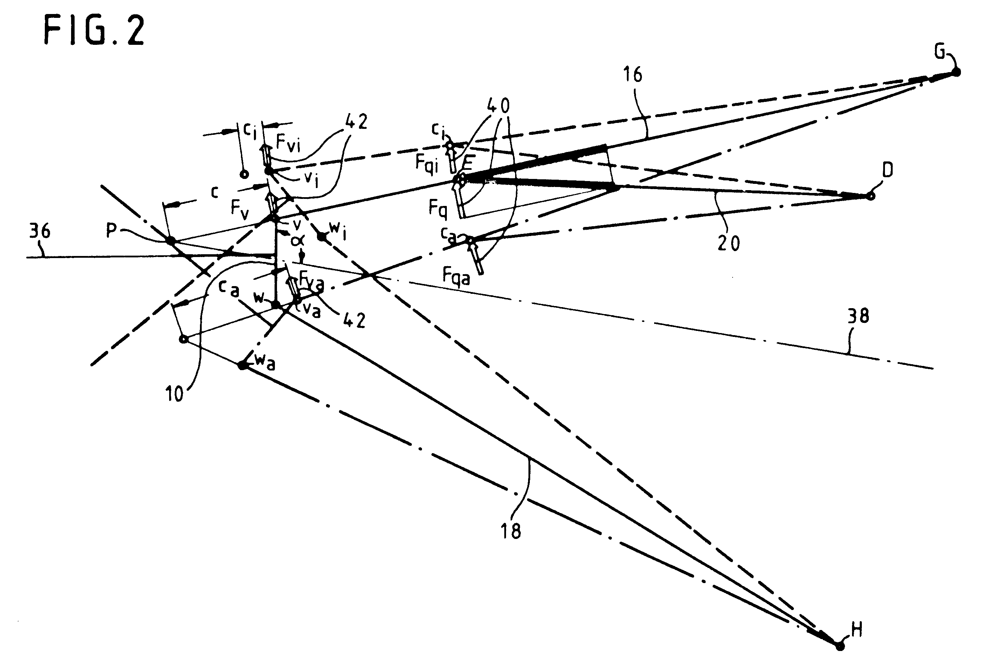

Die Fig. 2 zeigt die unteren Lenker 16, 18 in ihrer geometrischen Lage in Geradeausfahrtstellung (durchgezogene Linien), bei kurveninnerem Lenkeinschlag des Rades (gestrichelte Linien) und bei kurvenäußerem Lenkeinschlag (strichpunktierte Linien). In der Geradeausfahrtstellung ist der vordere Lenker 16 etwa 15 Grad nach außen hinten mit Bezug zu einer senkrechten Fahrzeugquerebene geneigt. Der hintere Lenker 18 verläuft mit einem Winkel von ca. 45 Grad nach außen vorne (hinten und vorne mit Bezug zur regulären Fahrtrichtung des Kraftfahrzeuges). Dies ergibt eine Symmetrielinie 38 der Lenker 16, 18, die ca. einen Winkel von 15 Grad nach außen vorne zur Fahrzeugquerebene bzw. zur Radachse 36 entspricht. Dabei liegen die aufbauseitigen Anlenkungspunkte G und H bzw. deren Verbindungsgerade in einem Winkel von ca. 15 Grad nach vorne innen zu einer Fahrzeuglängsachse, während die radträgerseitigen Anlenkpunkte V und W bzw. deren Verbindungsgerade einen stumpfen Winkel $\alpha$ zur Symmetrielinie 38 von ca. 100 Grad einschließt.

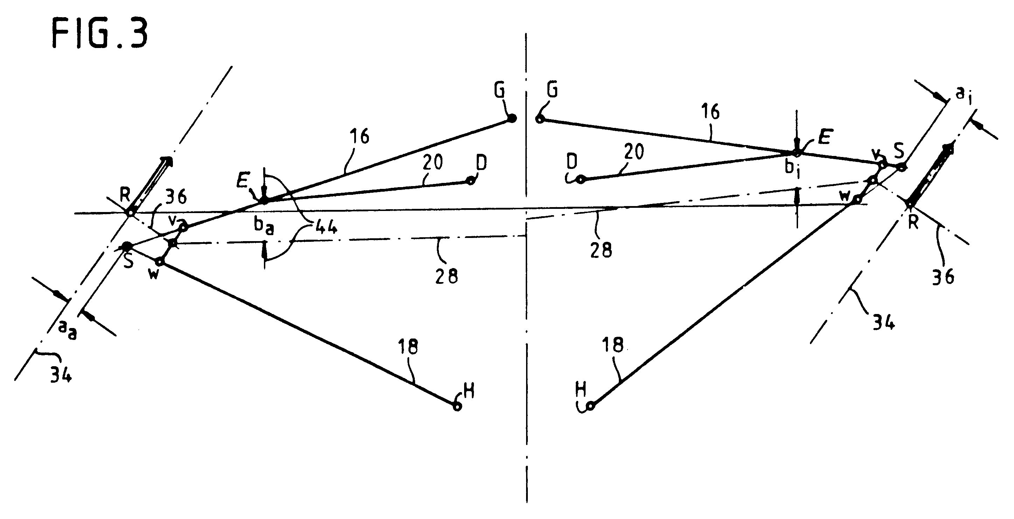

Durch diese geometrische Anordnung erzeugt das an den Abstützpunkten E und D angreifende Federbein 20, wobei die Verbindungsgerade der Abstützpunkte E und D in der Draufsicht etwa parallel zur Radachse 36 verläuft, eine Querkraftkomponente $F_q$ (Pfeile 40), die als Reaktion an dem radträgerseitigen Anlenkpunkt V des Lenkers 16 ein Lenkmoment $F_v \times C$ um den Schwenkpunkt P des Rades mit einer Hebellänge C erzeugt. Da der Radträger 10 über seinen Lenkhebel 30 und das übrige Lenksystem (nicht dargestellt) mit der spiegelbildlich gleichen Radaufhängung (vgl. Fig. 3) verbunden ist, wird dieses Lenkmoment durch das entgegengerichtete Lenkmoment der rechten Radaufhängung kompensiert.

Vergleicht man nun die Hebellänge C, um die die anteilige Querkraftkomponente $F_v$ des Federbeines 20 über den Schwenkpunkt V auf die Schwenkachse P wirkt, mit der Hebellänge $C_i$ bei kurveninnerem Einschlag und der Hebellänge $C_a$ bei kurvenäußerem Einschlag, so stellt man fest, daß bei kurveninnerem Einschlag die Hebellänge $C_i$ stark verringert ist. Dies bedeutet, daß beim Durchfahren einer Kurve jeweils an der linken oder der rechten Radaufhängung ein überwiegendes Lenkmoment aufgrund der größeren Hebellänge $C_a$ vorliegt, welches aufgrund der Angriffsrichtung (vgl. Pfeile 42) eine Lenkungsrückstellung bewirkt.

Wie die Fig. 3 zeigt, ergibt sich ferner auch ein unterschiedliches Maß a, welches bei kurveninnerem Lenkeinschlag (rechte Radaufhängung) größer ist als bei kurvenäußerem Lenkeinschlag (linke Radaufhängung). Daraus resultiert, daß der jeweils kurveninnere Störkrafthebelarm $a_i$ größer als der kurvenäußere $a_a$ ist und daß bei einer Beschleunigung des Kraftfahrzeuges aus der Kurve heraus ein eine Lenkungsrückstellung bewirkendes, aus der Antriebskraft resultierendes Lenkmoment am kurveninneren Rad auftritt.

Darüberhinaus ist durch die geometrische Anordnung des Lenkers 16 und des Federbeines 20 (vgl. Anlenkpunkte G, V und Abstützpunkte E, D) sichergestellt, daß bei einem Lenkeinschlag der Abstand b (Doppelpfeil 44) zwischen der Gelenkwelle 28 und dem Federbein 20 im wesentlichen gleich bleibt (vgl. Abstand $b_a$ bei kurvenäußerem Lenkeinschlag und $b_i$ bei kurveninnerem Lenkeinschlag). Bei Geradeausfahrtstellung der Räder des Kraftfahrzeuges ist das Maß a nahezu 0 (auf der Zeichnung nicht ersichtlich).

**Patentansprüche**

1.   Radaufhängung für gelenkte Räder von Kraftfahrzeugen, mit einem schwenkbaren Radträger, der an oberen und unteren Führungselementen geführt ist, wobei das untere Führungselement durch zwei konvergierend zum Radträger verlaufende Lenker gebildet ist, welche Lenker getrennt am Aufbau des Kraftfahrzeuges und am Radträger angelenkt sind, sowie mit einer zwischen dem Aufbau und der Radaufhängung angeordneten Feder und einem Stoßdämpfer, **dadurch gekennzeichnet,** daß die Feder (20) an einem der unteren Lenker (16) derart abgestützt ist, daß die Abstützpunkte (D,E) der Feder in der Draufsicht gesehen in definierter Richtung zur Radachse (36) in Geradeausfahrtstellung ausgerichtet am Lenker (16) eine Querkraftkomponente $F_q$ erzeugen, wobei die Lenkergeometrie derart ausgelegt ist, daß die anteilige Querkraftkomponente $F_v$ multipliziert mit dem Hebelarm C zwischen Anlenkpunkt V des Lenkers (16) am Radträger (10) und der durch die Verlängerung der Lenker (16,18) gebildeten ideellen Lenkachse P bei einem kurveninneren Lenkeinschlag einen geringeren Wert ($C_i$ x $F_{vi}$) einnimmt als bei einem kurvenäußeren Lenkeinschlag ($C_a$ x $F_{va}$), so daß auf die Räder bzw. die Lenkung ein resultierendes Rückstellmoment ausgeübt wird.

2. Radaufhängung nach Anspruch 1, **dadurch gekennzeichnet,** daß die Feder am in Fahrtrichtung vorderen Lenker (16) in Nähe des Radträgers (10) angreift, während der aufbauseitige Angriffspunkt (D) in der Draufsicht zwischen den aufbauseitigen Anlenkpunkten (G, H) der Lenker (16, 18) und zumindest in Nähe deren Verbindungsgeraden liegt.

3. Radaufhängung nach den Ansprüchen 1 und 2, **dadurch gekennzeichnet,** daß die Abstützpunkte (D,E) der Feder in der Draufsicht gesehen etwa parallel zur Radachse (36) in Geradeausfahrtstellung ausgerichtet sind.

4. Radaufhängung nach den Ansprüchen 1, 2 oder 3, **dadurch gekennzeichnet,** daß die Symmetrielinie (38) der Lenker (16, 18) in der Draufsicht ca. 15 Grad zur Radachse (36) nach innen hinten geneigt ist und daß die Verbindungsgerade der radträgerseitigen Anlenkpunkte (V, W) der Lenker (16, 18) einen stumpfen Winkel $\alpha$ mit der Symmetrielinie (38) einschließt.

5. Radaufhängung nach einem oder mehreren der Ansprüche 1 bis 4, **dadurch gekennzeichnet,** daß die Verbindungsgerade der aufbauseitigen Anlenkpunkte (G, H) der Lenker (16, 18) in Draufsicht um ca. 15 Grad in Fahrtrichtung nach innen zur Fahrzeug-Längsachse geneigt ist.

6. Radaufhängung nach einem oder mehreren der Ansprüche 1 bis 5, **dadurch gekennzeichnet,** daß der vordere Lenker (16) in der Draufsicht ca. 15 Grad nach außen hinten gegenüber einer Fahrzeugquerebene bzw. der Radachse (36) geneigt angeordnet ist.

7. Radaufhängung nach Anspruch 1, **dadurch gekennzeichnet,** daß an dem Lenker (16) ein durch Teleskopstoßdämpfer (22) und eine Feder (24) gebildetes Federbein (20) angreift.

## Claims

1. Wheel suspension for steerable wheels of motor vehicles, with a pivotable wheel support member which is guided on upper and lower guide elements, the lower guide element being formed of two links arranged to converge on the wheel support member, said links being separately connected pivotably to the motor vehicle body and to the wheel support member, also with a shock absorber and a spring which is arranged between the body and the wheel suspension, characterised in that the spring (20) is so supported on one of the lower links (16) that the support points (D, E) of the spring as seen in plan view aligned in a specific direction relatively to the wheel axle (36) in the straight-ahead running position produce a transverse force component $F_q$ on the link (16), the link geometry being so arranged that the proportionate transverse force component $F_v$ multiplied by the lever arm C between the point V where the link (16) is attached pivotably to the wheel support member (10) and the ideal steering axis P formed by the prolongation of the links (16, 18) assumes a lower value ($C_i$ x $F_{vi}$) at an inside-of-curve steering deflection than at an outside-of-curve steering deflection ($C_a$ x $F_{va}$), so that a resulting return moment is exerted on the wheels, or the steering.

2. Wheel suspension according to claim 1, characterised in that the spring engages on the forward link (16) in the travel direction in the vicinity of the wheel support member (10), whereas the point of engagement (D) at the vehicle body side in plan view is situated between the pivot points (G, H) of the links (16, 18) at the body side and at least in the vicinity of the straight line connecting these.

3. Wheel suspension according to claims 1 and 2, characterised in that the support points (D, E) of the spring as seen in plan view are directed substantially parallel to the wheel axle (36) in the straight-ahead running position.

4. Wheel suspension according to claims 1, 2 or 3, characterised in that the line of symmetry (38) of the links (16, 18) is in plan view inclined inwardly to the rear by about 15 degrees relatively to the wheel axle (36), and that the straight line connecting the pivot points (V, W) of the links (16, 18) at the wheel support member side forms an obtuse angle α with the line of symmetry (38).

5. Wheel suspension according to one or more of claims 1 to 4, characterised in that the line connecting the body-side pivot points (G, H) of the links (16, 18) is in plan view inclined inwardly through about 15 degrees in the travel direction relatively to the longitudinal axis of the vehicle.

6. Wheel suspension according to one or more of claims 1 to 5, characterised in that the forward link (16) is in plan view arranged inclined by about 15 degrees outwardly to the rear relatively to a transverse vehicle plane or the wheel axle (36).

7. Wheel suspension according to claim 1, characterised in that a spring leg (20) formed of a telescopic shock absorber (22) and a spring (24) acts on the link (16).

**Revendications**

1. Suspension de roue pour les roues directrices de véhicules automobiles, comprenant un support de roue pivotant qui est guidé par des éléments de guidage supérieur et inférieur, l'élément de guidage inférieur étant constitué par deux bras oscillants qui s'étendent en convergeant vers le support de roue, lesquels bras oscillants sont séparés au niveau de la carrosserie du véhicule et sont articulés au niveau du support de roue, ainsi qu'un ressort et un amortisseur disposés entre la carrosserie et la suspension de roue, caractérisée en ce que le ressort (20) prend appui sur l'un des bras oscillants inférieurs (16) de telle manière que les points d'appui (D, E) du ressort, orientés dans une direction définie en une vue de dessus par rapport à l'axe de roue (36) en position de marche en ligne droite, crèent une composante de force transversale $F_q$ sur le bras oscillant (16), la géométrie des bras oscillants étant telle que la composante de force transversale proportionnelle $F_v$, multipliée par le bras de levier C entre le point d'articulation V du bras oscillant (16) sur le support de roue (10) et l'axe de direction virtuel P, formé par le prolongement des bras oscillants (16, 18), prenne, pour une roue braquée située à l'intérieur d'une courbe, une valeur ($C_i$ x $F_{vi}$) plus petite que pour une roue braquée située à l'extérieur de la courbe ($C_a$ x $F_{va}$), de sorte qu'un moment résultant de rappel soit exercé sur les roues ou sur la direction.

2. Suspension de roue selon la revendication 1, caractérisée en ce que le ressort attaque le bras oscillant (16) situé en avant dans le sens de la marche, à proximité du support de roue (10), tandis que son point d'attaque (D) du côté carrosserie est situé, en une vue de dessus, entre les points d'articulation (G, H) des bras oscillants (16, 18) du côté carrosserie et au moins à proximité de la ligne qui joint ces points.

3. Suspension de roue selon la revendication 1 ou 2, caractérisée en ce que les points d'appui (D, E) du ressort sont orientes, en une vue de dessus, à peu près parallèlement à l'axe de roue (36) en position de marche en ligne droite.

4. Suspension de roue selon l'une quelconque des revendications 1 à 3, caractérisée en ce qu'en une vue de dessus, la bissectrice (38) de l'angle forme par les bras oscillants (16, 18) s'étend vers l'intérieur et vers l'arrière avec une inclinaison d'environ 15° par rapport à l'axe de roue (36), et en ce que la droite joignant les points d'articulation (V, W) des bras oscillants (16, 18) du côté support de roue forme un angle obtus α avec la bissectrice (38).

5. Suspension de roue selon l'une quelconque des revendications 1 à 4, caractérisée en ce qu'en une vue de dessus, la droite joignant les points d'articulation (G, H) des bras oscillants (16, 18) du côté carrosserie s'étend vers l'intérieur dans le sens de la marche avec une inclinaison d'environ 15° par rapport à l'axe longitudinal du véhicule.

6. Suspension de roue selon l'une quelconque des revendications 1 à 5, caractérisée en ce qu'en une vue de dessus, le bras oscillant avant (16) s'étend vers l'extérieur et vers l'arrière avec une inclinaison d'environ 15° par rapport à un plan transversal du véhicule ou à l'axe de roue (36).

7. Suspension de roue selon la revendication 1, caractérisée en ce qu'une jambe de force à ressort (20), constituée par un amortisseur télescopique (22) et un ressort (24), attaque le

bras oscillant (16).

FIG.1

EP 0 289 889 B1

# FIG.2

EP 0 289 889 B1

# FIG.3

EP 0 289 889 B1